# EUROPÄISCHE PATENTANMELDUNG

(11) **EP 0 693 671 A2**
(43) Veröffentlichungstag der Anmeldung: **24.01.1996**
(21) Anmeldenummer: 95108928.3
(22) Anmeldetag: 09.06.1995
(51) Int. Cl.: G01B 13/06

(54) **Sensor zur Erfassung der Schichtdicke einer Schicht aus gefrorener Flüssigkeit an einem Kühlkörper**

(30) Priorität: 23.07.1994 DE 4426227
(71) Anmelder: De Vries, Hubert, D-70771 Leinfelden-Unteraichen (DE)
(72) Erfinder: De Vries, Hubert, D-70771 Leinfelden-Unteraichen (DE)
(74) Vertreter: Vetter, Hans, Dipl.-Phys. Dr.

(57) **Zusammenfassung**

Es wird ein Sensor zur Erfassung der Schichtdicke einer Schicht (14) aus gefrorener Flüssigkeit an einem Kühlkörper (10) vorgeschlagen, der von der Flüssigkeit (12) umströmt oder berieselt wird oder der wenigstens teilweise in die Flüssigkeit (12) eingetaucht ist. Der Sensor (13) besteht aus einem am Kühlkörper (10) anzubringenden Hohlkörper (15), der ein Ausdehnungsfluid (20) enthält, wobei den Druck oder die Ausdehnung des Ausdehnungsfluids (20) erfassende Sensormittel (19) am oder im Hohlkörper (15) angeordnet sind. Dieser Sensor kann in einfacher Weise sehr kostengünstig und robust ausgebildet werden und ermöglicht dennoch eine exakte Erfassung der Schichtdicke.

## Beschreibung

Die Erfindung betrifft einen Sensor zur Erfassung der Schichtdicke einer Schicht aus gefrorener Flüssigkeit an einem Kühlkörper, der von der Flüssigkeit umströmt oder berieselt wird oder der wenigstens teilweise in die Flüssigkeit eingetaucht ist.

Eine spezielle Anwendung der Kältetechnik ist die sogenannte Eisspeicherung, wie dies z.B. in der Zeitschrift "KK - Die Kälte- und Klimatechnik", 46. Jahrgang, 1993, Heft 10, Seiten 628 - 635, unter dem Titel "Eisspeicher-Systeme und deren Kosteneinsparung" beschrieben ist. Das Prinzip besteht darin, in einer Kälteanlage mit billigem Nachtstrom Eis zu produzieren, das am Tage als solches oder als "Kälte-Energie" wieder verwendet werden kann. Hierzu wird ein rohrschlangenartiges oder plattenartiges Verdampfersystem in einem Wasserbehälter angeordnet, wobei das Verdampfersystem einen Teil eines Kühlkreislaufs darstellt. Im Betrieb wird das Verdampfersystem so weit herabgekühlt, daß sich an den Rohrschlangen oder an den Platten Eis bildet. Hierbei ist zu beachten, daß ab einer bestimmten Eisdicke die Wirtschaftlichkeit einer weiteren Eiserzeugung stark abnimmt, so daß es wünschenswert ist, die Eisdicke auf einen vorbestimmten Wert zu begrenzen und danach die Anlage abzuschalten oder wenigstens in ihrer Leistung zu reduzieren. Zur Messung der Eisdicke ist es bekannt, Ultraschallverfahren oder Leitfähigkeits-Meßverfahren einzusetzen. Der Nachteil bei den Ultraschallverfahren besteht im hohen Preis, während die Leitfähigkeits-Messung zu sehr ungenauen Ergebnissen führt, da beispielsweise verschmutztes Wasser die Messung stark beeinträchtigt.

Eine Aufgabe der Erfindung besteht daher darin, einen kostengünstigen, robusten und dabei präzisen Sensor zur Erfassung einer solchen Schichtdicke von gefrorener Flüssigkeit zu schaffen.

Diese Aufgabe wird erfindungsgemäß dadurch gelöst, daß der Sensor aus einem am Kühlkörper anzubringenden Hohlkörper besteht, der ein Ausdehnungsfluid enthält, und daß den Druck oder die Ausdehnung des Ausdehnungsfluids erfassende Sensormittel am oder im Hohlkörper angeordnet sind.

Dieser Sensor ist sehr einfach aufgebaut und kann daher sehr kostengünstig realisiert werden. Dennoch kann die Schichtdicke der gefrorenen Flüssigkeit bzw. des Eises sehr präzise erfaßt werden, da bei sich vergrößernder Schichtdicke ein immer größerer Bereich des Sensors vom Eis umgeben ist und die Temperatur des Ausdehnungsfluids dadurch absenkt. Die sich hieraus ergebende Volumenveränderung bzw. Druckveränderung kann sehr einfach durch bekannte Sensormittel erfaßt werden. Der Hohlkörper kann sehr robust ausgebildet werden und vorzugsweise auch die Sensormittel enthalten, so daß diese gegen mechanische Einflüsse geschützt sind. Dabei läßt sich der Sensor ohne Probleme wasserdicht ausführen. Der Sensor kann in einer bekannten unproblematischen Weise am Kühlkörper fixiert werden.

Durch die in den Unteransprüchen aufgeführten Maßnahmen sind vorteilhafte Weiterbildungen und Verbesserungen des im Anspruch 1 angegebenen Sensors möglich.

In vorteilhafter Weise ist der eine langgestreckte Gestalt aufweisende Hohlkörper mit einer seiner Stirnseiten am Kühlkörper anbringbar, wobei die Länge des Hohlkörpers größer als die zu messende Schichtdicke ist. Insbesondere ist der Hohlkörper dabei als Rohr ausgebildet.

Die Sensormittel sind zweckmäßigerweise am oder im von der Kontaktstelle mit dem Kühlkörper abgewandten Endbereich des Hohlkörpers angeordnet, damit keine Funktionsbeeinträchtigung der Sensormittel durch die gefrorene Flüssigkeit auftreten kann.

Vorzugsweise wird ein Ausdehnungsfluid mit einem negativen Ausdehnungskoeffizienten gewählt, damit sich das Volumen bzw. der Druck bei wachsender Schichtdicke erhöht. Es können jedoch prinzipiell auch Ausdehnungsfluide mit positiven Ausdehnungskoeffizienten eingesetzt werden.

Die Sensormittel können als am oder im Hohlkörper angeordneter Drucksensor ausgebildet sein, oder der Hohlkörper besitzt eine Membran oder eine kolbenartige Ausdehnungswandung, die mit den Sensormitteln in Wirkverbindung steht, wobei als Sensormittel induktive oder kapazitive Positionssensoren oder Piezoelemente geeignet sind. Derartige Sensoren sind als handelsübliche Sensoren kostengünstig erhältlich und können beispielsweise in einer gekapselten Ausführung vorliegen.

Der Hohlkörper ist am Kühlkörper angeklebt, angeschweißt, angelötet oder angeklemmt, das heißt, es kann eine kostengünstige und einfach durchzuführende Art der Verbindung gewählt werden.

Zur Messung der Schichtdicke der Schicht aus gefrorener Flüssigkeit am Kühlkörper dient in vorteilhafter Weise eine Regelvorrichtung, die einen mikroprozessorgesteuerten Regler enthält, dem als Istwert das Sensorsignal zugeführt wird und dessen Stellgröße auf den Kühlkreislauf eines Kühlmittels durch den Kühlkörper einwirkt. Ist die gewünschte, als Sollwert vorliegende Schichtdicke erreicht, so wird die Kühlleistung des Kühlkreislaufs heruntergeregelt, so daß sich die Eisschicht bzw. Schicht aus gefrorener Flüssigkeit nicht mehr vergrößert. Als Soll-Schichtdicke wird dabei zweckmäßigerweise eine Schichtdicke gewählt, innerhalb der die Eisbildung noch mit vernünftigem Wirkungsgrad vor sich geht und/oder die sich an der benötigten Eismenge und der erwünschten gespeicherten "Kälte-Energie" orientiert.

Ausführungsbeispiele der Erfindung sind in der Zeichnung dargestellt und in der nachfolgenden Beschreibung näher erläutert. Es zeigen:
- Fig. 1: ein erstes Ausführungsbeispiel eines Sensors zur Erfassung der Schichtdicke, der an einem plattenförmigen Kühlkörper angebracht ist, in einer Schnittdarstellung,
- Fig. 2: ein zweites Ausführungsbeispiel eines solchen Sensors und
- Fig. 3: eine schematische Darstellung einer Regeleinrichtung, bei der ein derartiger Sensor zur Bildung des Istwerts der Schichtdicke Di verwendet wird.

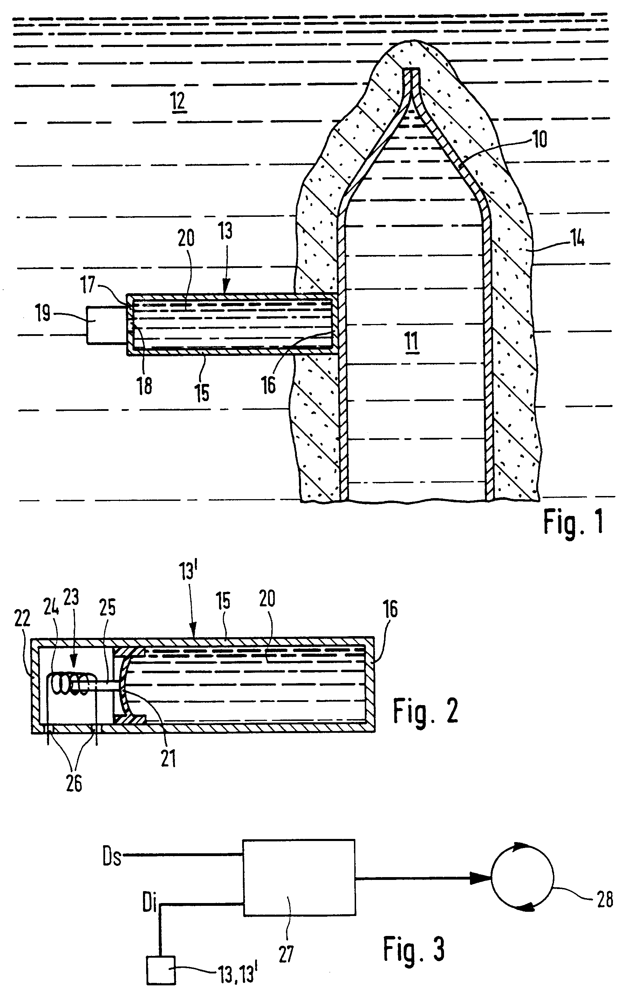

In Fig. 1 ist der obere Bereich einer Verdampferplatte 10 dargestellt, die Teil eines im übrigen nicht dargestellten Plattenverdampfers ist, welcher an einen ebenfalls nicht dargestellten Kühlkreislauf angeschlossen ist. Der Plattenverdampfer bzw. die Verdampferplatte 10 ist somit Teil einer Kältemaschine. Anstelle von Platten kann der Verdampfer selbstverständlich prinzipiell auch ein Rohrschlangen- oder Rohrschlaufensystem aufweisen. Die von einem Kältemittel 11 durchströmte Verdampferplatte 10 befindet sich in einem zur Vereinfachung nicht dargestellten, mit Wasser 12 gefüllten Behälter.

Seitlich an der Verdampferplatte 10 ist ein Sensor 13 zur Erfassung der Schichtdicke einer Eisschicht 14 befestigt, die sich bei entsprechender Arbeitsweise der Kältemaschine an der Verdampferplatte 10 und selbstverständlich auch an den übrigen, nicht dargestellten Verdampferplatten bildet.

Der Sensor 13 besteht aus einem Rohr 15, das an beiden Enden mit Stirnwandungen 16, 17 verschlossen ist. Während die Stirnwandung 16 das Rohr 15 dichtend verschließt, besitzt die Stirnwandung 17 eine Durchgangsöffnung 18, die außen durch einen Drucksensor 19 dichtend verschlossen ist. Der Sensor 13 ist mit seiner Stirnwandung 16 an der Verdampferplatte 10 fixiert, beispielsweise angeklebt, verschweißt, verlötet, verklemmt oder verschraubt. Das Rohr 15 ist mit einem Ausdehnungsfluid 20 gefüllt, also beispielsweise mit einem Gas oder einer Flüssigkeit, das einen negativen Ausdehnungskoeffizienten aufweist.

Bevor die Eisbildung an der Verdampferplatte 10 beim Betrieb der Kältemaschine einsetzt, weist das Wasser 12 eine Temperatur von im wesentlichen 0° C auf. Da der Sensor 13 vollständig von diesem Wasser 12 umgeben ist, ist seine Temperatur im wesentlichen auf demselben Wert. Das Ausdehnungsfluid 20 weist bei dieser Temperatur einen bestimmten Druck auf. Bei wachsender Schichtdicke der Eisschicht 14 ist ein immer größerer Teil des Sensors 13 von der Eisschicht 14 umgeben. Diese kühlt das Ausdehnungsfluid 20 ab, so daß dessen Druck zunimmt. Die Druckzunahme wird vom Drucksensor 19 erfaßt, wobei der gemessene Druck somit ein Maß für die Schichtdicke der Eisschicht 14 ist.

Es ist selbstverständlich auch möglich, ein Ausdehnungsfluid mit einem positiven Ausdehnungskoeffizienten zu verwenden. In diesem Falle nimmt der Innendruck im Rohr 15 bei wachsender Schichtdicke der Eisschicht 14 ab, was ebenfalls durch den Drucksensor 19 registriert werden kann.

Bei dem in Fig. 2 dargestellten zweiten Ausführungsbeispiel eines Sensors 13' zur Erfassung der Schichtdicke sind gleiche oder gleich wirkende Teile mit denselben Bezugszeichen versehen und nicht nochmals beschrieben. Bei diesem zweiten Ausführungsbeispiel ist im Rohr 15 eine Membran 21 angeordnet, die zusammen mit einem Teil des Rohrs 15 und der Stirnwandung 16 einen hermetisch abgeschlossenen, mit dem Ausdehnungsfluid 20 gefüllten Hohlraum bildet. Zwischen der Membran 21 und einer der Stirnwandung 16 gegenüberliegenden Stirnwandung 22 des Rohrs 15 befindet sich ein Positionssensor 23. Er besteht im wesentlichen aus einer Induktionsspule 24, in die ein langgestreckter, mit der Membran 21 verbundener Magnetkern 25 teilweise hineinragt. Die beiden Anschlüsse der Induktionsspule 24 sind mittels dichtender Stromdurchführungen 26 aus dem Rohr 15 herausgeführt.

Bei sich vergrößernder Eisschicht 14 kühlt sich das Ausdehnungsfluid 20 immer mehr ab und dehnt sich bei negativem Ausdehnungskoeffizienten aus. Die Volumenvergrößerung führt zu einer Ausdehnung der Membran 21, durch die der Magnetkern 25 weiter in die Induktionsspule 24 hineintaucht. Die sich hieraus ergebende Änderung der Induktivität führt zu einem Meßwert, der proportional zur Eisschichtdicke ist.

Anstelle des Positionssensors 23 kann selbstverständlich auch ein anderer bekannter Positionssensor treten, z.B. ein kapazitiver Positionssensor od.dgl. Weiterhin kann die Membran 21 auch beispielsweise auf ein Piezoelement einwirken. Anstelle einer Membran 21 kann auch ein anderes Element treten, das sich bei sich veränderndem Volumen des Ausdehnungsfluids verschiebt, beispielsweise ein kolbenartiges Element.

Bei den Sensoren zur Erfasssung der Schichtdicke kann der jeweilige Druck- oder Positionssensor wahlweise dichtend im Rohr 15 gemäß Fig. 2 oder dichtend am Rohr 15 gemäß Fig. 1 angeordnet sein. Selbstverständlich können auch mehrere Sensoren zur Erfassung der Schichtdicke an einer oder mehreren Verdampferplatten oder Rohrschlangen angeordnet sein, an denen sich die Eisschicht ausbildet.

Die Erfindung ist selbstverständlich nicht auf die Anwendung bei Wasser beschränkt, sondern umfaßt allgemein die Bildung einer gefrorenen Schicht aus einer Flüssigkeit an einem Kühlkörper.

Es ist auch möglich, daß der Kühlkörper, beispielsweise die Verdampferplatte, nicht vollständig in eine Flüssigkeit, beispielsweise in Wasser, eingetaucht ist, sondern von dieser Flüssigkeit berieselt oder besprüht wird.

In Fig. 3 ist eine Regelvorrichtung zur Regelung der Eisschichtdicke schematisch dargestellt. Einem Regler 27 wird ein Sollwert Ds für die Eisschichtdicke und der Meßwert des Sensors 13 (bzw. 13' gemäß Fig. 2) als Istwert Di zugeführt. Die Stellgröße am Ausgang des Reglers 27 wirkt auf den Kältekreislauf 28 ein, der beispielsweise einen die Verdampferplatte 10 enthaltenden Plattenverdampfer besitzt. Beispielsweise wird hierbei die Leistung des Kältekompressors durch die Stellgröße eingestellt bzw. eingeregelt. Erreicht die gemessene Schichtdicke den Sollwert, so wird die Kühlleistung abgesenkt. Der Regler 27 ist beispielsweise ein mikroprozessorgesteuerter Regler.

## Patentansprüche

1. Sensor zur Erfassung der Schichtdicke einer Schicht aus gefrorener Flüssigkeit an einem Kühlkörper, der von der Flüssigkeit umströmt oder berieselt wird oder der wenigstens teilweise in die Flüssigkeit eingetaucht ist, dadurch gekennzeichnet, daß der Sensor (13, 13') aus einem am Kühlkörper (10) anzubringenden Hohlkörper (15) besteht, der ein Ausdehnungsfluid (20) enthält, und daß den Druck oder die Ausdehnung des Ausdehnungsfluids (20) erfassende Sensormittel (19, 23) am oder im Hohlkörper (15) angeordnet sind.

2. Sensor nach Anspruch 1, dadurch gekennzeichnet, daß der eine langgestreckte Gestalt aufweisende Hohlkörper (15) mit einer seiner Stirnseiten (16) am Kühlkörper (10) anbringbar ist, wobei die Länge des Hohlkörpers (15) größer als die zu messende Schichtdicke ist.

3. Sensor nach Anspruch 2, dadurch gekennzeichnet, daß der Hohlkörper (15) als Rohr ausgebildet ist.

4. Sensor nach einem der vorhergehenden Ansprüche, dadurch gekennzeichnet, daß die Sensormittel (19, 23) am oder im von der Kontaktstelle mit dem Kühlkörper (10) abgewandten Endbereich des Hohlkörpers (15) angeordnet sind.

5. Sensor nach einem der vorhergehenden Ansprüche, dadurch gekennzeichnet, daß das Ausdehnungsfluid (20) einen negativen Ausdehnungskoeffizienten aufweist.

6. Sensor nach einem der vorhergehenden Ansprüche, dadurch gekennzeichnet, daß die Sensormittel (19) als am oder im Hohlkörper (15) angeordneter Drucksensor ausgebildet sind.

7. Sensor nach einem der Ansprüche 1 bis 5, dadurch gekennzeichnet, daß der Hohlkörper (15) eine Membran (21) oder eine kolbenartige Ausdehnungswandung besitzt, die mit den Sensormitteln (23) in Wirkverbindung steht.

8. Sensor nach Anspruch 7, dadurch gekennzeichnet, daß die Sensormittel (23) als induktiver oder kapazitiver Positionssensor oder als Piezoelement ausgebildet sind.

9. Sensor nach einem der vorhergehenden Ansprüche, dadurch gekennzeichnet, daß der Hohlkörper (15) am Kühlkörper (10) angeklebt, angeschweißt, angelötet oder angeklemmt ist.

10. Regelvorrichtung für die Schichtdicke einer Schicht aus gefrorener Flüssigkeit an einem Kühlkörper, der von der Flüssigkeit umströmt oder berieselt wird oder der wenigstens teilweise in die Flüssigkeit eingetaucht ist, mit einem Sensor nach einem der vorhergehenden Ansprüche, gekennzeichnet durch einen mikroprozessorgesteuerten Regler (27), dem als Istwert (Di) das Sensorsignal zugeführt wird und dessen Stellgröße auf den Kühlkreislauf (28) eines Kühlmittels (11) durch den Kühlkörper (10) einwirkt.
